# EUROPEAN PATENT APPLICATION

(11) **EP 2 605 474 A1**
(43) Date of publication of application: **19.06.2013**
(21) Application number: 12196350.8
(22) Date of filing: 10.12.2012
(51) Int. Cl.: H04L 29/06, H04N 21/462

(54) **Method and device for controlling access to out-of-band contents for combination with trusted contents, and associated equipments**

(30) Priority: 12.12.2011 EP 11306637
(71) Applicant: Thomson Licensing, 92130 Issy-les-Moulineaux (FR)
(72) Inventor: Onno, Stéphane, 92443 Issy-les-Moulineaux (FR); Neumann, Christoph, 92443 Issy-Les-Moulineaux (FR); Heen, Olivier, 92443 Issy-Les-Moulineaux (FR)
(74) Representative: Ståhl, Björn Niclas

(57) **Abstract**

A method is intended for controlling access to out-of-band contents, provided by an out-of-band source (N1), by at least one communication equipment (CE) connected to a managed source (N2), providing trusted contents, and coupled to this out-of-band source (N1). This method comprises the steps of:
(i) transmitting security data, representative of a policy defining out-of-band contents that are allowed to be combined with a trusted content, from a communication equipment (CE) to a network equipment (NE) connected to the out-of-band source (N1), and
(ii) transmitting a message, requesting transmission on a chosen trusted communication path (TP) of a chosen out-of-band content to be combined with the trusted content, from the communication equipment (CE) to the network equipment (NE), then enforcing the policy associated to this trusted content into a security means (SM) of the network equipment (NE), then transmitting this chosen out-of-band content to at least the communication equipment (CE) requesting it through this chosen trusted communication path (TP) if it conforms to the enforced policy.

## Description

### TECHNICAL FIELD

The present invention relates to communication equipment that may acquire contents from at least two sources.

In the following description a source designates either a communication network or a link or else an electronic equipment.

### BACKGROUND OF THE INVENTION

It has been recently proposed to provide end user communication equipment with a new function consisting in combining (for instance aggregating) in real time digital contents originating from different sources to produce a new digital content ready to be used. This is notably the case of set-top boxes (or STBs) which may allow, for instance, end users to watch a broadcast (or multicast) video program, originating from a first source (for instance a network), on a screen (for instance the one of a TV set), while listening to a selected audio program (or sequence) that is not broadcasted but available (for instance by streaming) on a second source (for instance the Internet). In this example, the STB aggregates (or combines) both contents (i.e. the video and audio programs) to define an aggregated (or combined) content devoid of the audio data of the video program.

Such a new function requires that the communication equipment (for instance a STB or a managed phone, or else a managed tablet) be connected to a managed source (such as a broadcast link or a managed network of a service provider) and to an out-of-band source, and be capable of simultaneously consuming contents coming from these sources.

In the following the term "out-of-band source" refers to an unmanaged source, the term "out-of-band content" refers to a content that is delivered through an out-of-band source, and the term "trusted content" refers to a content that is delivered through a managed source (or link or network (such as a broadcast network or a managed service provider network)).

Usually, digital content that is broadcast, for instance through a satellite link or a xDSL link, may be considered as trusted as this link is managed and trusted. So, such digital content may be used by an end user communication equipment even if the latter does not comprise a protection means (such as a firewall). In contrast, audio data or subtitle data or else dubbing data or other related metadata delivered through an out-of-band link, for instance the Internet, are generally considered as untrusted because this out-of-band link is unmanaged and therefore untrusted.

As it is known by the man skilled in the art most of the above cited communication equipments use contents through low level function(s) (such as middleware, drivers, operating system (or OS), or file system (for instance FAT or NTFS)). Out-of-band content, that is delivered to a communication equipment through an out-of-band link (for instance the Internet), is managed by a browser that tries to limit access to the low-level functions of this communication equipment (e.g. the browser may use sandboxing). The aggregation (or combination) of an out-of-band content with a trusted content relies also on a low-level function. So, low-level functions are exposed to out-of-band contents when the communication equipment does not comprise a protection means, such as a firewall, for instance.

The Blu-ray consortium has proposed to implement a security scheme into a Blu-ray equipment for granting extra permissions (such as network access or titles) based on an authenticated signed application running on its videodisc. Unfortunately, the trusted content comes from the physical videodisc and not from a stream, so this solution cannot be applied to content streams originating from an external source (i.e. a source an electronic equipment is connected to for receiving content(s)).

### SUMMARY OF THE INVENTION

So, an objective of the invention is to allow a communication equipment, that is devoid of security (or protection) means, to trust out-of-band content that is to be combined with other trusted content.

For this purpose, the invention notably proposes a control method, intended for controlling access to out-of-band contents (provided by an out-of-band source) by at least one communication equipment connected to a managed source (providing trusted contents) and coupled to this out-of-band source, and comprising the steps of:
(i) transmitting security data, representative of a policy defining out-of-band contents that are allowed to be combined with a trusted content, from a communication equipment to a network equipment connected to the out-of-band source, and
(ii) transmitting a message, requesting transmission on a chosen trusted communication path of a chosen out-of-band content to be combined with the trusted content, from the communication equipment to the network equipment, then enforcing the policy associated to this trusted content into a security means of the network equipment, then transmitting this chosen out-of-band content to at least the communication equipment requesting it through the chosen trusted communication path if it conforms to the enforced policy.

So, the communication equipment may delegate security function to the network equipment for combination (for instance aggregation) purpose.

The control method according to the invention may include additional characteristics considered separately or combined, and notably:
- in step (i) at least some of the security data associated to the trusted content may be extracted by the communication equipment from auxiliary data contained into a data stream comprising this trusted content;
- in a variant or in complement, during step (i) at least some of the security data associated to the trusted content may be defined by a user of the communication equipment;
- in step (ii) the security means may drop or modify the chosen out-of-band content if it does not conform to the enforced policy;
   ➢ in step (ii) the network equipment may send a message to the communication equipment to notify that the chosen out-of-band content has been dropped or modified for security reason;
- in a variant, during step (ii) the security means may authorize the chosen out-of-band content to be transmitted to the communication equipment through an untrusted communication path if it does not conform to the enforced policy and if it is requested from an application of the communication equipment having access to this untrusted communication path;
- the policy may be chosen from a group comprising, at least, at least one authorized content site, at least one authorized resource, at least one forbidden content site, at least one forbidden resource, at least one javascript restriction, at least one flash restriction, at least one web application firewall rule, at least one intrusion detection rule, at least one virtual patching rule, a list of authorized session cookies, and at least one specific restriction on cookies;
- the requested out-of-band content, that conforms to the enforced policy, may also be transmitted to at least one other communication equipment that is coupled to the network equipment having enforced this policy;
   ➢ this transmission may occur through a trusted path established between the network equipment and a dedicated port of the other communication equipment or through a network domain to which each communication equipment belongs or subscribes (e.g. a multicast subnet).

The invention also provides a control device, intended for being associated to a network equipment (connected to an out-of-band source providing out-of-band contents, comprising a security means arranged for controlling access to the out-of-band contents, and coupled to a communication equipment (connected to a managed source providing trusted contents and coupled to the out-of-band source)), and arranged, in case of reception from this communication equipment, on the one hand, of security data representative of a policy defining out-of-band contents that are allowed to be combined with a trusted content, and on the other hand, of a message requesting transmission on a chosen trusted communication path of a chosen out-of-band content to be combined with the trusted content, for ordering the security means to enforce the policy associated to this trusted content, in order the chosen out-of-band content be transmitted to at least the communication equipment through the chosen trusted communication path if it conforms to the enforced policy.

The invention also provides a network equipment (or node), intended for being connected to an out-of-band source providing out-of-band contents and for being coupled to a communication equipment (connected to a managed source providing trusted contents and coupled to the out-of-band source), and comprising a security means arranged for controlling access to the out-of-band contents and a control device such as the one above introduced.

For instance, the security means may comprise the control device.

The invention also provides a communication equipment, intended for being connected to a managed source (providing trusted contents) and to a network equipment (connected to an out-of-band source providing out-of-band contents and comprising a security means arranged for controlling access to the out-of-band contents), and comprising a content combining means arranged:
- for ordering to its communication equipment to transmit security data, representative of a policy defining out-of-band contents that are allowed to be combined with a trusted content, to the network equipment, and a message, requesting transmission on a chosen trusted communication path of a chosen out-of-band content to be combined with the trusted content, to the network equipment, and
- in case of reception of a requested chosen out-of-band content by its communication equipment, for combining it with the trusted content.

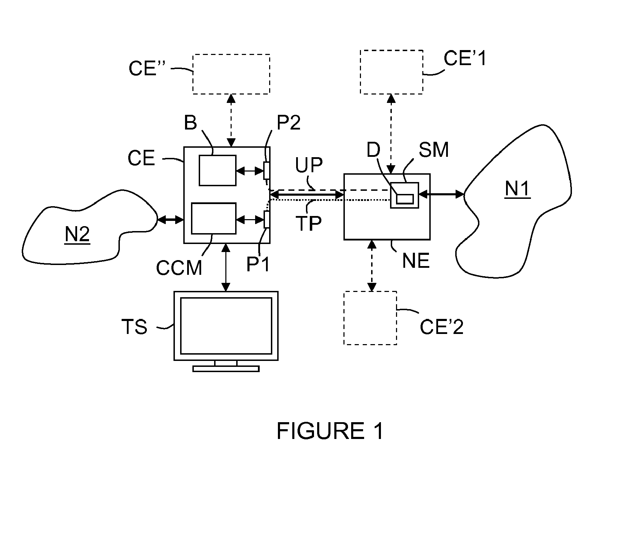

### BRIEF DESCRIPTION OF THE FIGURE

Other features and advantages of the invention will become apparent on examining the detailed specifications hereafter and the appended drawing, wherein the unique figure schematically and functionally illustrates an example of communication equipment, connected to a managed network providing trusted contents, and to a network equipment (or node), comprising a control device according to the invention and connected to an out-of-band network providing out-of-band contents.

### DETAILED DESCRIPTION OF THE PREFERRED EMBODIMENT

The appended drawing may serve not only to complete the invention, but also to contribute to its definition, if need be.

The invention aims, notably, at offering a control method, and an associated control device D, intended for allowing at least one communication equipment CE, which then can be virtually devoid of security (or protection) means, to combine trusted content, provided by a managed source N2, with out-of-band content provided by an out-of-band source N1 if they are considered as trusted by a network equipment (or node) NE.

It is recalled that the term "out-of-band source" refers to an unmanaged source, the term "out-of-band content" refers to a content that is delivered through an out-of-band source, and the term "trusted content" refers to a content that is delivered through a managed source (i.e. managed link or managed network (such as a broadcast network or a managed service provider network) or else managed electronic equipment).

In the following description it will be considered that the managed source N2 is a satellite network that is arranged for broadcasting trusted contents to communication equipments CE. But, the invention concerns any managed source that can provide trusted content to communication equipments CE. So, the managed source N2 could also be a managed electronic equipment or a managed wired network or infrastructure or else a managed wireless network (for instance a mobile or cellular network).

Moreover, in the following description it will be considered that the out-of-band source N1 is a xDSL network (for instance an ADSL one) that is arranged for transmitting out-of-band contents to communication equipments CE and network equipment. Preferably, such a xDSL network (or link) provides access to the Internet. But, the invention concerns any out-of-band source or link that can provide untrusted content to communication equipment CE and network equipment. So, the out-of-band source N1 could be any broadband access wireless or wired network or infrastructure.

More, in the following description, as illustrated in the Figure, it will be considered that the communication equipment CE is a Set-top box (or STB) acting as an integrated receiver/decoder for a television set TS and comprising content combination means CCM arranged for combining (for instance aggregating) content originating from different sources. But, the invention concerns any communication equipment that can be connected to at least two sources (or links) and comprising content combination means CCM such as the one mentioned above. So, the communication equipment CE could also be a managed phone or a managed tablet.

In the example illustrated in the Figure, the communication equipment CE (here a STB) is connected to a managed source N2 (here a satellite network) and to out-of-band source N1 (here an ADSL network) through a network equipment (or node) NE.

In the following description it will be considered that the network equipment (or node) NE is a gateway connected to the out-of-band network N1 and comprising security (or protection) means SM arranged for controlling access of the communication equipment CE to out-of-band content provided by the out-of-band network N1. But, the invention concerns any network equipment (or node) NE that can act as a network access interface, with security function(s), between at least one out-of-band source and at least one communication equipment. So, the network equipment (or node) NE could also be a wireless access point or a 3G access point or else a switch, for instance.

Moreover, in the following description it will be considered that the security (or protection) means SM is a firewall (from ISO layer 2 to ISO layer 7). But, any other type of security (or protection) means capable of enforcing security (or protection) policies can be used. So, it may also be an Intrusion Detection System (IDS) capable of detecting in-depth intrusion, for instance.

The invention proposes, notably, a control method comprising two steps (i) and (ii). Such a control method may be implemented by a control device D, here associated to the gateway NE, and, for instance, a new type of content combination means CCM, that equips the communication equipment (here a Set-top box) CE.

In the example illustrated in the Figure the control device D is located in the firewall SM of the gateway NE. But in a first variant the control device D could be located in the gateway NE and coupled to the firewall SM, and in a second variant the control device D could be an appliance that is connected to the gateway NE and capable of exchanging data with the firewall SM.

It is important to note that the control device D could be associated to a network equipment of the out-of-band network N1 which is not the gateway CE but comprises the security means SM. For instance this other network equipment could be a service provider back-end. In this case the communication equipment CE may be coupled to the out-of-band network N1 either directly or indirectly through a gateway.

So, the control device D can be made of software modules, at least partly, or a combination of electronic circuit(s) or hardware modules and software modules (in this case it further comprises software interfaces allowing interworking between the hardware and software modules).

A first step (i) of the control method consists in transmitting security data, representative of a policy defining out-of-band content that is allowed to be combined with a chosen trusted content (that is, or will be, received by the communication equipment (here a Set-top box) CE), from the Set-top box CE to a network equipment that is connected to the out-of-band network N1, here the gateway NE.

A lot of policies may be used, and notably:
- at least one authorized content site and/or resource; e.g. through URLs or hashes of files or content, and including authorized protocols,
- at least one forbidden content site and/or resource; e.g. through URLs or hashes of files or content, and including unauthorized protocols,
- at least one javascript restriction; e.g. totally forbid javascript(s), forbid javascript(s) for some sites only, some precise javascript instructions that are forbidden,
- at least requiring data tainting mean; for instance, without tainted data every X seconds the out-of-band data must be dropped or other verifications,
- at least one restriction concerning Rich Internet Applications (such as javascript, flash, silverlight, HTML5): e.g. totally forbid application(s), forbid application(s) for some sites only, static verification required on application(s), forbid applications known to be dangerous (by checking their hash for instance),
- at least one web application firewall rule; e.g. protection rule(s) against current or recent vulnerabilities defined by Open Web Application Security Project (OWASP) Application Security Verification Standard (ASVS), and in particular protections against Cross-Site Scripting (XSS) vulnerabilities,
- at least one intrusion detection rule; such as the one used by an Intrusion Detection System (IDS),
- at least one virtual patching rule, for instance intended for forbidding specific packets towards the set-top-box until they are duly patched (for content modification on the fly to remove packets that could exploit STB vulnerabilities),
- a list of authorized session cookies, and
- at least one specific restriction on cookies.

This first step (i) may be carried out by the content combining means CCM of the Set-top box CE. More precisely, the content combining means CCM may be arranged for ordering to its Set-top box CE to transmit security data associated to a chosen trusted content to the gateway NE.

The security data may have at least two sources: the data stream comprising the chosen trusted content or the Set-top box CE.

Indeed, in a first embodiment, the data stream comprising the chosen trusted content may comprise auxiliary data including at least some of the security data associated to this chosen trusted content. In this case, the content combining means CCM may be arranged for extracting the security data associated to the chosen trusted content from the auxiliary data contained into the data stream thereof. This can be made by means of a dedicated filtering function or on user request. Such an extraction can be automatic.

For instance, if the chosen trusted content is a TV program comprising video data associated to audio data in French language, the associated security data may be an URL designating a content site offering equivalent audio data in at least one other language (for instance English or Spanish or German), so that a user may listen to audio data in another language than the French one when viewing the video data on the television screen. If a user has selected a content combination (for instance aggregation) service offered by the content combining means CCM of his Set-top box CE, the different languages, that are proposed by the designated content site for the trusted content chosen by the user, may be automatically displayed on the screen of the television set TS. So, the user may select one of them by means of a human-machine interface (or user interface) of the set-top-box CE that is coupled to the content combining means CCM. The requested out-of-band content could also be a RSS feed with meta-data or subtitles, for instance.

In a second embodiment, which may be possibly combine with the first embodiment, the user of the set-top-box CE may have previously defined at least some of the security data associated to the trusted content he has chosen. For this purpose the user may use a human-machine interface (or user interface) of the set-top-box CE that is coupled to the content combining means CCM.

For instance, if the chosen trusted content is a TV program comprising video data associated to audio data in French language, the STB user may select into a list (or provide) another language (which is associated to an URL designating a content site offering equivalent audio data in at least one other language (for instance English or Spanish or German)). Then the content combining means CCM produces security data from the URL that is associated to the selected language, so that the user may automatically listen to audio data in the selected language when viewing the video data on the television screen, if he has selected the content combination service offered by the content combining means CCM of his Set-top box CE.

In another example, the STB user may select into a list (or provide) a music program (which is associated to an URL designating a content site offering one or several music programs). Then the content combining means CCM produces security data from the URL that is associated to the selected music program, so that the user may automatically listen to this selected music program when viewing the video data on the television screen, if he has selected the content combination service offered by the content combining means CCM of his Set-top box CE.

A first part of the second step (ii) of the control method consists in transmitting a message, requesting transmission on a chosen trusted communication path TP of a chosen out-of-band content to be combined with a designated trusted content, from the Set-top box CE to the gateway NE (in the described example).

This first part of the second step (ii) may be carried out by the content combining means CCM of the Set-top box CE. More precisely, the content combining means CCM may be arranged for ordering to its Set-top box CE to transmit a message, it has generated and that requests transmission on a chosen trusted communication path TP of a chosen out-of-band content it wants to combine with the designated trusted content, to the gateway NE (in the described example).

It is important to note that the connection to the out-of-band source N1 (for accessing to out-of-band content(s)) may be initiated by the set-top-box CE or the gateway NE or else the out-of-band source N1 (in a "push mode"), for instance.

A trusted path TP is a communication path that has been established between the gateway NE (in the described example) and a first dedicated port P1 of the Set-top box CE (for instance "192.168.1.2/1000").

The system could use the "deny by default" security policy, i.e. no unauthorized out-of-band content is allowed to flow through the trusted path TP towards the Set-top box CE.

A second part of the second step (ii) of the control method consists in enforcing the policy that is associated to the designated trusted content into the security means SM of the gateway NE (in the described example), and then in transmitting this chosen out-of-band content to the Set-top box CE through this chosen trusted communication path TP if, and only if, it conforms to this enforced policy.

This second part of the second step (ii) may be carried out by the control device D of the gateway NE (in the described example). More precisely, each time the gateway NE has received security data, representative of a policy defining out-of-band contents that are allowed to be combined with a designated trusted content, and a message, requesting transmission on a chosen trusted communication path TP of a chosen out-of-band content to be combined with the designated trusted content, from the Set-top box CE, its control device D orders its security means SM to enforce this policy. So, when the security means SM has enforced this policy, it requests the chosen out-of-band content, designated into the message, through the out-of-band network N1, and, when it receives this requested out-of-band content, it checks if it conforms to the enforced policy. In the affirmative the security means SM transmits the received and checked out-of-band content to at least the Set-top box CE through the chosen trusted communication path TP, designated into the message.

When the content combining means CCM receives the checked out-of-band content it starts to combine (for instance aggregate) the chosen trusted content (without its own audio data) with the data of this checked out-of-band content for user enjoyment.

It is important to note that the set-top-box CE may transmit the received trusted content combined (for instance aggregated) with the received and checked out-of-band content to the television set TS or to another electronic or communication equipment CE" that is coupled to it (for instance, a phone or tablet), or it may transmit the received trusted content (possibly modified) to the television set TS and the received and checked out-of-band content to another electronic or communication equipment CE" that is coupled to it, or else it may transmit the received trusted content (possibly modified) to another electronic or communication equipment CE" that is coupled to it and the received and checked out-of-band content to the television set TS, for instance.

If the received out-of-band content does not conform to the enforced policy, or cannot be modified to conform to the enforced policy, the security means SM may drop it. In addition, the security means SM, and therefore the gateway NE, may also send a message to the Set-top box CE in order to notify that the requested chosen out-of-band content has been dropped for security reason. When the content combining means CCM of the Set-top box CE receives such a message, it may order the television set TS to display on its screen and/or to diffuse by means of its loudspeakers a message of the type "The requested content has been dropped for security reasons".

If the received out-of-band content can be modified to conform to the enforced policy, it is modified accordingly by the security means SM. In addition, the security means SM, and therefore the gateway NE, may also send a message to the Set-top box CE in order to notify that the requested chosen out-of-band content has been modified for security reason. When the content combining means CCM of the Set-top box CE receives such a message, it may order to the television set TS to display on its screen and/or to diffuse by means of its loudspeakers a message of the type "The requested content has been modified for security reasons".

In a variant, the security means SM may authorize the received out-of-band content to be transmitted to at least the Set-top box CE through an untrusted communication path UP if it does not conform to the enforced policy and if it has been requested from an application of the Set-top box CE which has access to this untrusted communication path UP. Such an application may be, for instance, a (web) browser B or a dedicated storage function (for instance a "sandbox"). For instance, this may allow to access any RSS feed through the browser B (for instance for editing it), which does not exclude a possible aggregation of that RSS feed together with the trusted content but subject to a user authorization.

An untrusted path UP is a communication path that has been established between the gateway NE and a second dedicated port P2 of the Set-top box CE different from the first one (for instance "192.168.1.2/5000 or 192.168.1.2/1234).

It is important to note that a requested out-of-band content that conforms to the enforced policy may also be transmitted to one or more other communication equipments CE'k (with k = 1 or 2 in the illustrated example) that are coupled to the gateway NE (or the network equipment associated to the control device D and having enforced this policy) or to a managed local network or domain (for instance a residential or home network) that is connected to the gateway NE or coupled to the network equipment associated to the control device D and having enforced this policy. This transmission preferably occurs through a trusted path that has been established between the gateway NE (or another network equipment) and a dedicated port of each other communication equipment. This transmitted out-of-band content may be locally used for any purpose (including aggregation, but not exclusively).

Indeed, a policy may be applicable for any device of a managed local network or group of communication equipments although the corresponding security data were previously sent by one communication equipment CE (of this managed local network or group of communication equipments) to the gateway NE (or another network equipment). So, a unicast request from one communication equipment CE may possibly benefit to multicast receivers. In a variant (based on Internet Group Management Protocol (IGMP)), one communication equipment CE may send a request to the gateway NE (or other network equipment), so that the latter opens a multicast service and flow the requested and checked out-of-band stream on it.

It is also important to note that after having received a requested out-of-band content, that conforms to the enforced policy, the set-top-box CE may possibly transmit the received trusted content and/or this received out-of-band content to one or more other communication equipments CE" that may be coupled to it. Such a transmission may occur in a point-to-point (or unicast) mode or in a point-to-multipoint (multicast) mode, for instance. Moreover such a transmission may be carried out through an ad hoc wireless network (for instance, direct WiFi or Bluetooth or client WiFi with a WiFi access point function in the set-top-box CE) or via Internet (for instance in a peer-to-peer (or P2P) mode or via a third party virtual private network (or VPN) or cloud based), for instance.

The invention offers several advantages, amongst which:
- it enables a communication equipment to securely combine an out-of-band content with a trusted one. The protection of the trusted path of a communication equipment is performed on a network equipment (such as a gateway) to which this communication equipment is connected and which already embeds security means;
- there is no need to provide any additional security module on the communication equipment. So, existing communication equipment architecture is still usable, the communication equipment does not have to deal with network security which is already the responsibility of the gateway, and there is no impact on the performances of the communication equipment;
- several communication equipments may access a requested out-of-band content once it has already been allowed to flow beyond the network equipment that enforces the considered policy (through any trusted path);
- it allows preventing out-of-band content to access privileged functions of the communication equipments (e.g. by using the default browser) while providing these privileged access for out-of-band contents that conform a given policy (e.g. by using dedicated combination means);
- it limits the cost of providing security means in the communication equipments and make use of security means that are already provided by the network equipment. As it is known by the man skilled in the art, the security is a process that includes implementing security but also maintaining the security updates. It may rely for instance on security mechanisms provided on communication equipments as well as on back-end equipments (e.g. through the so-called TR-069).

The invention is not limited to the embodiments of control method, control device, network equipment (or node) and communication equipment described above, only as examples, but it encompasses all alternative embodiments which may be considered by one skilled in the art within the scope of the claims hereafter.

## Claims

1. Method for controlling access to out-of-band contents, provided by an out-of-band source (N1), by at least one communication equipment (CE) connected to a managed source (N2), providing trusted contents, and coupled to said out-of-band source (N1), **characterized in that** it comprises the steps of:
(i) receiving by a network equipment (NE) connected to said out-of-band source (N1) security data, representative of a policy defining out-of-band contents that are allowed to be combined with a trusted content, from a communication equipment (CE), and
(ii) receiving by said network equipment (NE) a message, requesting transmission on a chosen trusted communication path (TP) of a chosen out-of-band content to be combined with said trusted content, from said communication equipment (CE), then enforcing said policy associated to said trusted content into a security means (SM) of said network equipment (NE), then transmitting said chosen out-of-band content to at least said communication equipment (CE) requesting it through said chosen trusted communication path (TP) if it conforms to said enforced policy.

2. Method according to claim 1, **characterized in that** in step (i) at least some of said security data associated to said trusted content are extracted by said communication equipment (CE) from auxiliary data contained into a data stream comprising said trusted content.

3. Method according to one of claims 1 and 2, **characterized in that** in step (i) at least some of said security data associated to said trusted content are defined by a user of said communication equipment (CE).

4. Method according to one of claims 1 to 3, **characterized in that** in step (ii) said security means (SM) drops or modifies said chosen out-of-band content if it does not conform to said enforced policy.

5. Method according to claim 4, **characterized in that** in step (ii) said network equipment (NE) sends a message to said communication equipment (CE) to notify that said chosen out-of-band content has been dropped or modified for security reason.

6. Method according to one of claims 1 to 3, **characterized in that** in step (ii) said security means (SM) authorizes said chosen out-of-band content to be transmitted to said communication equipment (CE) through an untrusted communication path (UP) if it does not conform to said enforced policy and if it is requested from an application of said communication equipment (CE) having access to said untrusted communication path (UP).

7. Method according to one of claims 1 to 6, **characterized in that** said policy is chosen from a group comprising, at least, at least one authorized content site, at least one authorized resource, at least one forbidden content site, at least one forbidden resource, at least one javascript restriction, at least one flash restriction, at least one web application firewall rule, at least one intrusion detection rule, at least one virtual patching rule, a list of authorized session cookies, and at least one specific restriction on cookies.

8. Method according to one of claims 1 to 7, **characterized in that** said requested out-of-band content, that conforms to said enforced policy, is also transmitted to at least one other communication equipment that is coupled to said network equipment (NE) having enforced said policy.

9. Method according to claim 8, **characterized in that** said transmission occurs through a trusted path established between said network equipment (NE) and a dedicated port of said other communication equipment.

10. Method according to claim 8, **characterized in that** said transmission occurs through a network domain to which each communication equipment belongs or subscribes.

11. Control device (D) for a network equipment (NE) connected to an out-of-band source (N1) providing out-of-band contents, comprising a security means (SM) arranged for controlling access to said out-of-band contents, and coupled to a communication equipment (CE) connected to a managed source (N2) providing trusted contents and coupled to said out-of-band source (N1), **characterized in that** it is arranged, in case of reception from said communication equipment (CE) i) of security data representative of a policy defining out-of-band contents that are allowed to be combined with a trusted content, and ii) of a message requesting transmission on a chosen trusted communication path (TP) of a chosen out-of-band content to be combined with said trusted content, for ordering said security means (SM) to enforce said policy associated to said trusted content, in order said chosen out-of-band content be transmitted to at least said communication equipment (CE) through said chosen trusted communication path (TP) if it conforms to said enforced policy.

12. Network equipment (NE), intended for being connected to an out-of-band source (N1) providing out-of-band contents and for being coupled to a communication equipment (CE), connected to a managed source (N2) providing trusted contents and coupled to said out-of-band source (N1), and comprising a security means (SM) arranged for controlling access to said out-of-band contents, **characterized in that** it further comprises a control device (D) according to claim 11.

13. Network equipment according to claim 12, **characterized in that** said security means (SM) comprises said control device (D).

14. Communication equipment (CE), intended for being connected to a managed source (N2), providing trusted contents, and to a network equipment (NE), connected to an out-of-band source (N1) providing out-of-band contents and comprising a security means (SM) arranged for controlling access to said out-of-band contents, **characterized in that** it comprises content combining means (CCM) arranged:
- for ordering to said communication equipment (CE) to transmit security data, representative of a policy defining out-of-band contents that are allowed to be combined with a trusted content, to said network equipment (NE), and a message, requesting transmission on a chosen trusted communication path (TP) of a chosen out-of-band content to be combined with said trusted content, to said network equipment (NE), and
- in case of reception of said requested chosen out-of-band content by said communication equipment (CE), for combining it with said trusted content.
